(19) Europäisches Patentamt
European Patent Office
Office européen des brevets

(11) **EP 2 235 088 B1**

(12) **EUROPEAN PATENT SPECIFICATION**

(45) Date of publication and mention
of the grant of the patent:
**30.03.2016 Bulletin 2016/13**

(51) Int Cl.:
***C08G 63/84*** *(2006.01)*          ***C08K 5/00*** *(2006.01)*
***C08K 5/13*** *(2006.01)*

(21) Application number: **09703813.7**

(86) International application number:
**PCT/US2009/000103**

(22) Date of filing: **08.01.2009**

(87) International publication number:
**WO 2009/094102 (30.07.2009 Gazette 2009/31)**

(54) **POLYESTER MELT PHASE PRODUCTS AND PROCESS FOR MAKING THE SAME**

POLYESTERPRODUKTE AUS DER SCHMELZPHASE UND VERFAHREN ZU IHRER HERSTELLUNG

PRODUITS EN PHASE FONDUE DE POLYESTER ET PROCÉDÉ POUR LEUR FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **22.01.2008 US 17365**

(43) Date of publication of application:
**06.10.2010 Bulletin 2010/40**

(73) Proprietor: **GRUPO PETROTEMEX, S.A. DE C.V.**
**San Pedro Garza Garcia, Nuevo Leon 66265 (MX)**

(72) Inventors:
• **WHITE, Alan, Wayne**
  **Kingsport, TN 37664 (US)**
• **QUILLEN, Donna, Rice**
  **Kingsport, TN 37660 (US)**

• **WEINHOLD, Stephen**
  **Kingsport, TN 37664 (US)**
• **PEARCY, Barry, Glen**
  **Mount Carmel, TN 37645 (US)**
• **JENKINS, Jason, Christopher**
  **Kingsport, TN 37663 (US)**

(74) Representative: **Tostmann, Holger Carl et al**
**Wallinger Ricker Schlotter Tostmann**
**Patent- und Rechtsanwälte**
**Zweibrückenstrasse 5-7**
**80331 München (DE)**

(56) References cited:
**EP-A- 0 620 245      EP-A- 1 227 117**
**WO-A-2006/032022    JP-A- 2002 332 337**
**US-A- 2 720 506**

**Description**

FIELD OF THE INVENTION

The invention relates to polyester polymers comprising at least one polyethylene terephthalate polyester; at least one alkali metal-aluminum compound; in accordance with claim 1. The invention also relates to articles comprising at least one polyester polymer melt phase product in accordance with claim 4. This invention also relates to a melt phase process for making a polyester polymer melt phase product in accordance with claim 6.

BACKGROUND OF THE INVENTION

Certain polyester compositions, suitable for molding, are useful in packaging, such as in the manufacture of beverage containers. For example, some poly(ethylene terephthalate) polymers ("PET") are useful for that purpose, and PET has become popular because of its lightness, transparency and chemical inertness.

PET is normally produced in a two-stage process, beginning with a melt phase stage followed by a solid stating stage. The melt phase stage is typically a three-phase process. First, in the esterification stage, ethylene glycol is reacted with terephthalic acid in a slurry under positive pressure and a temperature of 250-280°C yielding oligomeric PET. Next, the oligomer is heated to a slightly higher temperature, usually 260-290°C, and the positive pressure is changed to a mild vacuum, usually 20-100 mm, to yield the prepolymer. Finally, the prepolymer is converted to the final polymer by continuing to reduce the pressure to 0.5-3.0 mm and sometimes raising the temperature. After the three-phase melt process is complete, typically pellets at the end of the polymer stage are increased in molecular weight by a solid state process. Typically, both the melt phase and solid state process stages are conducted in the presence of an antimony catalyst.

Antimony can be problematic, however. When it is used as a polycondensation catalyst for polyester and the polyester is molded into a bottle, for example, the bottle is generally hazy and often has a dark appearance from the antimony catalyst that is reduced to antimony metal.

Disadvantages involved with the use of antimony, as well as other factors, lead to the development of an antimony-free melt phase only process. However, the oxidative stability of PET prepared by such a method may be decreased and may result in a breakdown in molecular weight when the PET is exposed to air at temperatures around or exceeding 165°C. That is problematic in that PET must be dried before it is processed, and the drying of PET is generally carried out above 165°C.

Thus, there remains a need in the art for PET that can be produced by an antimony-free melt phase only process and that possesses higher oxidative stability. Increased stability may allow drying at the higher temperatures. Additionally, it may eliminate the need to produce higher molecular weight PET to compensate for molecular weight breakdown.

JP 2002-332337, EP 1 227 117 and US 2 720 506 describe PET polymers comprising an alkali metal-aluminum catalyst. EP 620 245 and WO 2006/032022 disclose phenolic anti-oxidants, which increase the oxidative stability of PET copolymers.

SUMMARY OF THE INVENTION

We have found that the incorporation of at least one alkali metal-aluminum compound and at least one phenolic stabilizer in a melt phase only process for producing a polyester polymer may provide increased oxidative stability such that the resultant product may be dried at higher temperatures.

There is now provided polyester polymers in accordance with claim 1. This invention also relates to a melt phase process for making a polyester polymer melt phase product in accordance with claim 6.

BRIEF DESCRIPTION OF THE DRAWINGS

**Fig. 1** depicts the stability of PET in air at 192°C over the course of 24 hours from Example 1, comparing PET and PET which was prepared with Irganox 1010 (941 ppm) added prior to the esterification process.

**Fig. 2** depicts the stability of PET in air at 192°C over the course of 24 hours from Example 1, comparing PET and PET which was prepared with Irganox 1010 (948 ppm) added prior to the esterification process.

**Fig. 3** depicts the stability of PET in air at 192°C over the course of 24 hours from Example 2, comparing PET and PET which was prepared with Irganox 1010 (1400 ppm) in a continuous process.

**Fig. 4** depicts the stability of PET in air at 192°C over the course of 24 hours from Example 2, comparing PET which was prepared with varying levels of Irganox 1010 in a continuous process.

**Fig. 5** depicts the stability of PET in air at 192°C over the course of 24 hours from Example 3, comparing PET and PET which was prepared with varying levels of Irganox 1010 added at the prepolymer stage.

**Fig. 6** depicts the stability of PET in air at 192°C over the course of 24 hours from Example 4, comparing PET and PET which was prepared with varying levels of Irganox 1010 added at the end of the polymerization stage.

**Fig. 7** depicts the stability of PET in air at 192°C over the course of 24 hours from Example 5, comparing PET and PET which was prepared with nonylphenol, BHT or vitamin E in a continuous process.

DETAILED DESCRIPTION OF THE INVENTION

The present invention may be understood more readily by reference to the following detailed description of the invention, including the appended figures, and to the examples provided. It is to be understood that this invention is not limited to the specific processes and conditions described in the examples, because specific processes and process conditions for processing plastic articles may vary. It is also to be understood that the terminology used is for the purpose of describing particular embodiments only and is not intended to be limiting.

As used in the specification and the claims, the singular forms "a," "an," and "the" include plural referents unless the context clearly dictates otherwise. For example, reference to a "preform," "container" or "bottle" or an "article" is intended to include a plurality of preforms, containers, bottles, or articles.

By "comprising" or "containing" we mean that at least the named compound, element, particle, etc. must be present in the composition or article, but does not exclude the presence of other compounds, materials, particles, etc., even if the other such compounds, material, particles, etc. have the same function as what is named.

It is also to be understood that the mention of one or more process steps does not preclude the presence of additional process steps before, after, or intervening between those steps expressly identified, unless such a process step is expressly excluded by the claim.

Expressing a range includes all integers and fractions thereof within the range. Expressing a temperature or a temperature range in a process, or of a reaction mixture, or of a melt or applied to a melt, or of a polymer or applied polymer means in all cases that the reaction conditions are set to the specified temperature or any temperature, continuous or intermittently, within the range; and that the reaction mixture, melt, or polymer are subjected to the specific temperature.

A "melt phase product" is a polyester polymer obtained from a melt phase reaction. Melt phase products may be isolated in the form of pellets or chips, or may be fed as a melt directly from the melt phase finishers into extruders and directed into molds for making shaped articles such as bottle preforms (e.g. "melt to mold" or "melt to preform"). Unless otherwise specified, the melt phase product may take any shape or form, including amorphous pellets, crystallized pellets, solid stated pellets, preforms, sheets, bottles, tray, jar, and so forth.

The term "melt" in the context of melt phase product is a broad umbrella term referring to a stream undergoing reaction at any point in the melt phase for making a polyester polymer, and includes the stream in esterification phase even though the viscosity of this stream is typically not meaningful, and also includes the stream in the polycondensation phase including the prepolymer and finishing phases, between each phase, and up to the point where the melt is solidified, and excludes a polyester product undergoing an increase in molecular weight in the solid state.

The term "alkali metal" refers to any metal in group 1A of the periodic chart and in particular refers to lithium, sodium, and potassium. The term alkali metal-aluminum catalyst refers to any compound that contains both an alkali metal and aluminum that is effective for catalyzing a polyester reaction or any combination of an alkali metal compound and aluminum compound that is an effective catalyst. For example, this would include, but not be limited to, a combination of lithium hydroxide and aluminum isopropoxide as well as a combination of sodium hydroxide and aluminum acetate.

Inherent viscosity (IV) is calculated from the measured solution viscosity. The following equations describe these solution viscosity measurements:

$$\eta_{inh} = [\ln (t_s/t_o)]/C$$

where

$\eta_{inh}$ = Inherent viscosity at 25°C at a polymer concentration of 0.50 g/ 100 mL of 60% phenol and 40% 1,1,2,2-tetrachloroethane

ln = Natural logarithm

$t_s$ = Sample flow time through a capillary tube

$t_o$ = Solvent-blank flow time through a capillary tube

C = Concentration of polymer in grams per 100 mL of solvent (0.50%)

Herein, inherent viscosity (IV) measurements were made under the conditions described above (at 25°C at a polymer concentration of 0.50 g/ 100 mL of 60% phenol and 40% 1,1,2,2-tetrachloroethane).

L*, a*, and b* color coordinates are measured on transparent injection-molded disks, according to the following method. A Mini-Jector model 55-1 is used to mold a circular disk which has a diameter of 40 mm and a thickness of 2.5 mm. Before molding, the pellets are dried for at least 120 minutes and no more than 150 minutes in a forced air mechanical convection oven set at 170 °C. The Mini-Jector settings are the following: rear heater zone = 275 °C; front two heater zones = 285 °C; cycle time = 32 seconds; and inject timer 30 seconds. The color of the transparent injection-molded disk is measured using a HunterLab UltraScan XE® spectrophotometer. The HunterLab UltraScan XE® spectrophotometer is operated using a D65 illuminant light source with a 10° observation angle and integrating sphere geometry. The HunterLab UltraScan XE® spectrophotometer is zeroed, standardized, UV calibrated, and verified in control. The color measurement is made in the total transition (TTRAN) mode. The L* value indicates the transmission/opacity of the sample. The "a*" value indicates the redness (+)/greenness (-) of the sample. The "b* value indicates the yellowness (+)/blueness (-) of the sample.

Alternatively, color values are measured on crystallized polyester pellets or crystallized polymer ground to a powder passing a 3 mm screen.. The polyester pellets or polymer specimens which are ground to a powder have a minimum degree of crystallinity of 15%. The HunterLab UltraScan XE® spectrophotometer is operated using a D65 illuminant light source with a 10° observation angle and integrating sphere geometry. The HunterLab UltraScan XE® spectrophotometer is zeroed, standardized, UV calibrated, and verified in control. The color measurement is made in the reflectance (RSIN) mode. The results are expressed in the CIE 1976 L*, a*, b* (CIELAB) color scale. The "L*" value indicates the lightness/darkness of the sample. The "a*" indicates the redness (+)/greenness (-) of the sample. The "b*" indicates the yellowness (+)/blueness (-) of the sample.

The at least one polyester polymer and polyester polymer melt phase products of the present invention comprises at least one polyethylene terephthalate polyester. In an embodiment, the at least one polyethylene terephthalate polyester is virgin (e.g., non-recycled) polyethylene terephthalate polyester. In an embodiment, the at least one polyethylene terephthalate polyester does not comprise any post-consumer recycled polyethylene terephthalate. In an embodiment, the at least one polyethylene terephthalate polyester does not comprise any pre-consumer recycled polyethylene terephthalate.

In accordance with the present invention, the at least one polyethylene terephthalate polyester comprises:

(a) residues of at least one carboxylic acid component wherein at least 90 mole% of the residues are residues of terephthalic acid based on 100 mole% of the residues of at least one carboxylic acid component, and

(b) residues of at least one hydroxyl component wherein at least 90 mole% of the residues are residues of ethylene glycol, based on 100 mole% of the residues of at least one hydroxyl component. In an embodiment, the at least one polyethylene terephthalate polyester further comprises up to 10 mole% of residues chosen from residues of isophthalic acid, residues of naphthalene dicarboxylic acid, residues of diethylene glycol, residues of 1,4-cyclohexanediol (CHDM), and residues of derivatives thereof.

Non-limiting exemplary ranges for residues of isophthalic acid are 0.5-5.0 mole% relative to the total diacid components, for residues of diethylene glycol are 0.5-4.0 wt% based on the weight of the polymer, and for residues CHDM are 0.5-4.0 mole % relative to glycol components. In an embodiment, the polyester polymer further comprises residues of phosphoric acid.

In accordance with the present invention, the at least one alkali metal-aluminum compound is lithium-aluminum.

In an embodiment, the amount of the at least one alkali metal-aluminum compound present in the polymer ranges from 3 ppm to 60 ppm based on the weight of aluminum contained in the compound. In an embodiment, the amount of the at least one alkali metal-aluminum compound present in the polymer ranges from 3 ppm to 100 ppm based on the weight of the aluminum contained in the compound. In an embodiment, the amount of the at least one alkali metal-aluminum compound present in the polymer ranges from 3 ppm to 20 ppm based on the amount of alkali metal.

In an embodiment, the at least one catalyst may be chosen from alkali metal-aluminum catalysts. In an embodiment, the at least one alkali-aluminum catalyst is lithium-aluminum.

In an embodiment, the amount of the at least one alkali-aluminum catalyst present in the polymer ranges from 3 ppm to 60 ppm based on the weight of aluminum contained in the catalyst. In an embodiment, the amount of the at least one alkali-aluminum catalyst present in the polymer in ranges from 3 ppm to 100 ppm based on the weight of the aluminum contained in the catalyst. In an embodiment, the amount of the at least one alkali metal-aluminum catalyst present in the polymer ranges from 3 ppm to 20 ppm based on the amount of alkali metal.

The invention comprises at least one phenolic stabilizer. The at least one phenolic stabilizer may react when added to the system. Accordingly, as used herein, the term "at least one phenolic stabilizer" encompasses both the starting stabilizer that is added to the system as well as any residues and/or reaction products of the starting stabilizer.

The at least one phenolic stabilizer should be of sufficient molecular weight so as to not be removed from the polymer production process. In an embodiment, the at least one phenolic stabilizer is chosen from phenolic stabilizers having a high molecular weight, such as nonylphenol. The at least one phenolic stabilizers in accordance with the present invention is pentaerythritol tetrakis[3-(3,5-di-tert-butyl-4-hydroxyphenyl)propionate] (e.g., Irganox 1010; CAS Registry No. 6683-19-8).

The at least one phenolic stabilizer is present in an amount ranging from 150 ppm to 350 ppm. In an embodiment, the at least one phenolic stabilizer is present in an amount ranging from 200 ppm to 300 ppm. In an embodiment, the at least one phenolic stabilizer is present in an amount ranging from 225 ppm to 275 ppm. In an embodiment, the at least one phenolic stabilizer is present in an amount ranging from 100 ppm to 200 ppm. In an embodiment, the at least one phenolic stabilizer is present in an amount ranging from 5 ppm to 100 ppm.

The amount of the at least one phenolic stabilizer in PET may be measured in the following manner, as exemplified for the present invention, in which when the at least one phenolic stabilizer is Irganox 1010. Approximately 0.12 g of the PET sample is weighed into a 20-mL headspace vial with a disposable stir bar. 3 mL of nPrOH with approximately 1000 ppm nonanol is weighed into the vial, and 1.5 mL of tetrabutyl ammonium hydroxide solution (60% in water) is added. The vial is capped and placed into a heat/stir block at 125°C until the sample has been completely hydrolyzed, which is generally about 15 minutes. Standards of the Irganox 1010 are weighed into headspace vials and prepared in the same manner as the samples discussed above. When the samples are hydrolyzed and cooled, 3 mL of acidified pyridine (30% HCl) is added and the contents of the vial are stirred rapidly for approximately one minute. A 100uL aliquot of the sample solution is transferred to a GC vial and 500 uL of BSTFA (N,O-Bis (Trimethylsilyl) trifluoroacetamide) were added. The vial is capped and put into a heat block at 80°C for 10 minutes to complete the derivatization of the hydroxyl groups. The Irganox 1010 falls apart in the hydrolysis, and the alkyl portion of the molecule (pentaerythritol) is measured. The mass spectrometer, an Agilent 5973N, is set to monitor ions 147 and 191 when the sample is injected, the largest two ions for pentaerythritol. The Agilent 5890 GC has a DB-17 capillary column which separates the components in the sample then introduces them into the mass spectrometer. The standards are run first and a calibration curve generated from those results. The area of the pentaerythritol is then calculated with the linear equation to determine the weight percent of the Irganox 1010 in the sample.

The at least one phenolic stabilizer may be incorporated at any point or points during the melt phase process from the formation of the slurry of at least ethylene glycol (EG) and terephthalic acid (TPA) to just before pelletization. The at least one phenolic stabilizer may be added to the entire process stream and/or may be added at a higher concentration to a slip stream and then mixed back with the entire process stream to achieve the desired level of stabilizer. In an embodiment, the at least one phenolic stabilizer is added in a slurry comprising ethylene glycol and terephthalic acid.

In an embodiment, the at least one polyethylene terephthalate polyester is virgin (non-recycled, pre- and/or post-consumer) polyethylene terephthalate polyester.

Further, according to the invention, in an embodiment, an article is provided in accordance with claim 4. In an embodiment, the at least one polyester polymer is at least one polyester polymer melt phase product. In an embodiment, the article may be a bottle, a preform, a jar, or a tray. The article, in an embodiment, comprises virgin (non-recycled, pre- and/or post-consumer) polyethylene terephthalate polyester.

In an embodiment, said polyester polymer does not comprise titanium. In an embodiment, said polyester polymer does not comprise manganese. In an embodiment, said polyester polymer does not comprise a phosphite compound.

In an embodiment, a polyester polymer is provided that comprises

(a) at least one polyethylene terephthalate polyester comprising

(i) residues of at least one carboxylic acid component wherein at least 90 mole% of the residues are residues of terephthalic acid based on 100 mole% of the residues of at least one carboxylic acid component,
(ii) residues of at least one hydroxyl component wherein at least 90 mole% of the residues are residues of ethylene glycol, based on 100 mole% of the residues of at least one hydroxyl component, and
(iii) up to 10 mole% of residues chosen from residues of isophthalic acid, residues of naphthalene dicarboxylic acid, residues of diethylene glycol, residues of 1,4-cyclohexanediol, and residues of derivatives thereof,

(b) at least one lithium aluminum compound; and
(c) from 200 ppm to 300 ppm of pentaerythritol tetrakis[3-(3,5-di-tert-butyl-4-hydroxyphenyl)propionate]. In an embodiment, the polyester polymer further comprises residues of phosphoric acid. In an embodiment, the polyester polymer further comprises a reheat additive.

In an embodiment, a polyester polymer is provided that comprises

(a) at least one polyethylene terephthalate polyester comprising

(i) residues of at least one carboxylic acid component wherein at least 90 mole% of the residues are residues of terephthalic acid based on 100 mole% of the residues of at least one carboxylic acid component,
(ii) residues of at least one hydroxyl component wherein at least 90 mole% of the residues are residues of ethylene glycol, based on 100 mole% of the residues of at least one hydroxyl component, and
(iii) up to 10 mole% of residues chosen from residues of isophthalic acid, residues of naphthalene dicarboxylic acid, residues of diethylene glycol, residues of 1,4-cyclohexanediol, and residues of derivatives thereof,

(b) at least one lithium aluminum compound; and
(c) from 100 ppm to 200 ppm of pentaerythritol tetrakis[3-(3,5-di-tert-butyl-4-hydroxyphenyl)propionate]. In an embodiment, the polyester polymer further comprises residues of phosphoric acid. In an embodiment, the polyester polymer further comprises a reheat additive.

Additionally, according to the invention, in an embodiment, a melt phase process for making a polyester polymer melt phase product is provided in accordance with claim 6.
This invention can be further illustrated by the following examples, although it will be understood that these examples are included merely for purposes of illustration and are not intended to limit the scope of the invention unless otherwise specifically indicated.

EXAMPLES

**Example 1: Stabilizer Added at the Beginning in a Laboratory Procedure**

Synthesis of PET in the laboratory consists of two steps: esterification of terephthalic acid (TPA) and isophthalic acid (IPA) with ethylene glycol (EG) in a Parr high pressure reactor; and polymerization of the resulting oligomer.
*Step 1) Esterification:* A two liter reaction vessel constructed of stainless steel was charged with TPA, IPA (2 mole % relative to PTA) and EG, and purged with nitrogen. Trimethyl ammonium hydroxide was added as a diethylene glycol (DEG) suppressant.
The heating, agitation, and pressure were all controlled by a distributed control system. The vessel was then heated to 245°C with constant agitation under 40 psi of nitrogen. As the reaction proceeded, water was removed from the reactor and was collected in a receiving flask. The extent of the reaction was monitored by the mass of water removed.
Upon completion, the pressure was ramped down to atmospheric pressure. The molten oligomer was then drained from the bottom of the vessel. Some of the material was collected in a small, round aluminum pan. A color measurement was made on this material, in the following manner. The HunterLab UltraScan XE® spectrophotometer was operated using a D65 illuminant light source with a 10° observation angle and integrating sphere geometry. The HunterLab UltraScan XE® spectrophotometer was zeroed, standardized, UV calibrated, and verified in control. The color measurement was made in the reflectance (RSIN) mode with the oligomer sample placed at the reflectance port. Tables 1-3 list the raw material charges, the reaction parameters, and the analytical results of the oligomers produced, respectively.

**Table 1: Raw Materials**

| Raw Material | Control A | Sample A |
|---|---|---|
| TPA (g) | 651 | 651 |
| IPA (g) | 13 | 13 |
| EG (g) | 397 | 397 |
| Trimethyl Ammonium Hydroxide 25% solution in water (buffer) | 0.78 | 0.78 |
| Irganox 1010 (g) | 0.0 | 0.78 |

**Table 2: Reaction Parameters for Esterification**

| Process Step | Time (min) | Stir Rate (rpm) | Pressure (psi) | Reactor Temp (°C) |
|---|---|---|---|---|
| 1 | 1 | 0 | 0 | 25 |
| 2 | 5 | 250 | 40 | 25 |
| 3 | 60 | 250 | 40 | 245 |
| 4 | 5 | 250 | 40 | 245 |
| 5 | 200 | 250 | 40 | 245 |
| 6 | 25 | 250 | 0 | 245 |
| 7 | 1 | 250 | 0 | 245 |

**Table 3: Analytical Results of Controls and Experimental Oligomer**

| Reference | Control A | Sample A |
|---|---|---|
| Conversion (%) | 97.30 | 97.30 |
| Degree of Polymerization | 2.69 | 2.72 |
| Diethylene Glycol (mole %) | 2.0 | 1.9 |
| Water Evolved (grams) | 120 | 118 |
| L* | 95.29 | 95.09 |
| a* | -0.46 | -0.55 |
| b* | 0.81 | 0.95 |

*Step 2) Polymerization*: Solid oligomer (113 g) was broken up and charged to a 500 mL round bottom flask along with the catalyst (0.40 g of a solution containing LiOH (2250 ppm Li) and aluminum isopropoxide (3000 ppm Al) in EG). The flask was fitted with a stainless steel paddle stirrer and the reaction was begun according to the parameters listed in Table 4 below. The temperature, vacuum, and stirring agitation were all controlled by a distributed control system. Phosphoric acid (20 mg) was added at the end of the polymerization (see Table 4, process stage 9).

When the polymerization sequence was complete, the heat was removed and the polymer was allowed to crystallize. Upon crystallization, the polymer was ground in a Wiley mill. All further testing was conducted on this ground material. Table 5 contains the final polymer data.

Samples comprising less than 100 ppm or more than 350 ppm of Irganox are comparative examples.

**Table 4: Reaction Parameters for Polymerization**

| Process Step | Time (min) | Temp (deg C) | Vac (torr) | Stir (rpm) |
|---|---|---|---|---|
| 1 | 0.1 | 275 | 760 | 0 |
| 2 | 10 | 275 | 760 | 150 |
| 3 | 8 | 288 | 33 | 150 |
| 4 | 25 | 288 | 33 | 150 |
| 5 | 5 | 285 | 5 | 100 |
| 6 | 60 | 285 | 5 | 100 |
| 7 | 5 | 284 | 2.3 | 50 |
| 8 | 120 | 284 | 2.3 | 50 |
| 9 | 1 | 284 | 300 | 50 |
| 10 | 2 | 284 | 300 | 50 |

(continued)

| Process Step | Time (min) | Temp (deg C) | Vac (torr) | Stir (rpm) |
|---|---|---|---|---|
| 11 | 1 | 284 | 300 | 0 |

**Table 5: Final Polymer Data**

| Polymer Description | Control B | Sample B | Control C | Sample C |
|---|---|---|---|---|
| Oligomer Source | Control A | Sample A | Control A | Sample A |
| IV (dL/g) | 0.663 | 0.610 | 0.704 | 0.740 |
| ICP (ppm Li) | 7.7 | 7.9 | 7.9 | 9.6 |
| ICP (ppm Al) | 12.4 | 11.4 | 11.7 | 13.7 |
| ICP (ppm P) | 4.2 | 16.4 | 46 | 30 |
| Irg1010 (ppm) | 0 | 941 | 0 | 948 |

**Stability Testing:** The stability of PET samples prepared from each of the processes above was tested in the following manner. The PET samples were ground to pass through a 3 mm screen. The ground material was then sieved with USA Standard Testing Sieves Nos. 8 and 16 to remove fines and yield a particle size of 1.2-2.4 mm for testing. Approximately 40 g of PET was poured into a glass chamber which was maintained at approximately 196°C with refluxing 1-octanol. Dry air was forced upward through the granules at a rate of 12 scfh throughout the process, and the pellet temperature was measured to be 192-193°C. Samples were extracted from the chamber at different time intervals and submitted for inherent viscosity ("IV") measurements to determine the IV loss as a function of time.

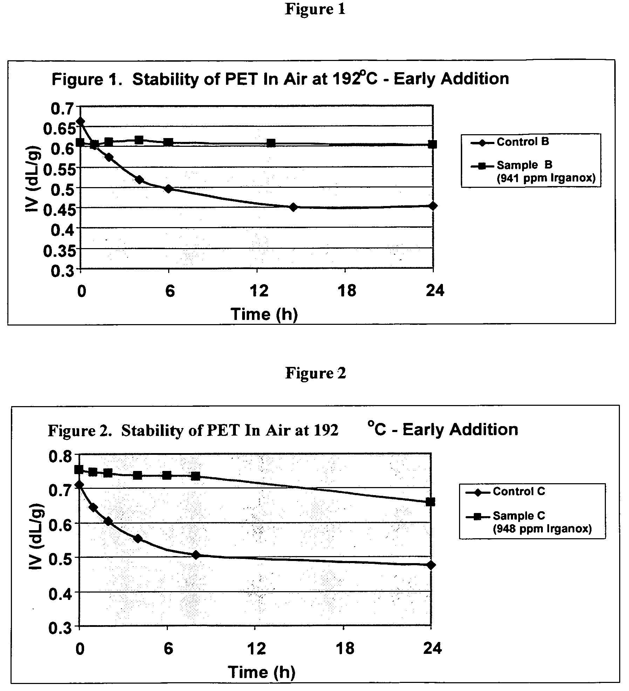

**Fig. 1** shows the difference between IV of Control B compared to Sample B over 24 hours.
**Fig. 2** shows the difference between IV of Control C compared to Sample C over 24 hours.

**Example 2: Stabilizer Added after Esterification in a Continuous Process**

Irganox 1010 was added to a continuous TPA-based polymerization process. The Irganox 1010 was added as a slurry in ethylene glycol at a process point between esterification and prepolymerization. The target level of Irganox 1010 was 1400 ppm. The molar ratio of the slurry of TPA/IPA/EG was 1.0/0.02/1.5. The esterification was conducted at 270°C and 25 psig. The prepolymerization was conducted in two stages from 275 to 285°C and from a slight positive pressure to about 100 mm vacuum. The final polymerization was conducted at 280-290°C at about 2 mm vacuum. Phosphoric acid (50 ppm as P) was added when the target IV had been obtained and the vacuum was removed. The IV of the resulting PET was 0.80 dL/g.

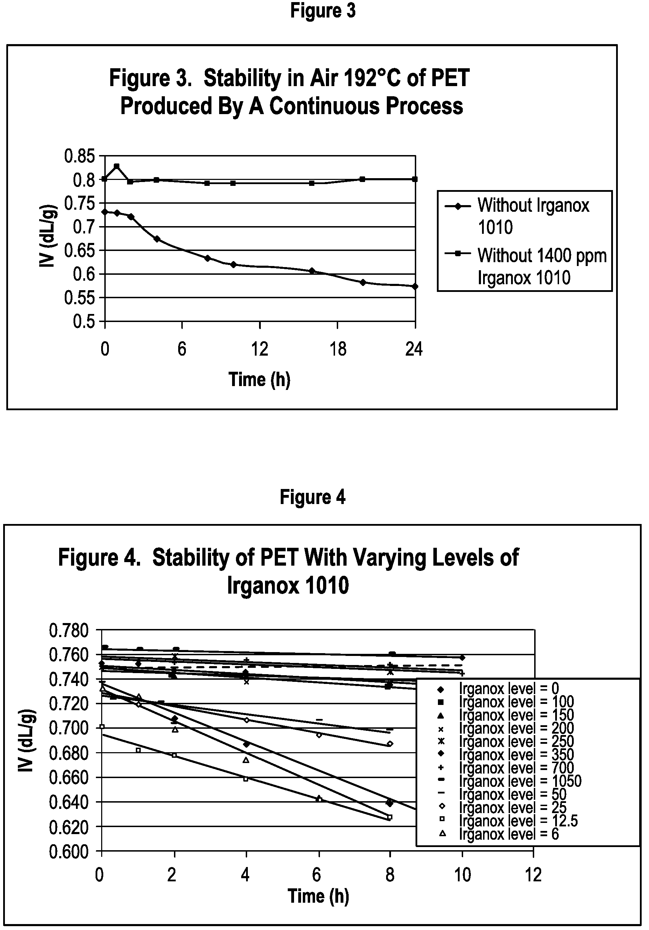

**Fig. 3** shows the differences in IV between a control made by the same process and having the same composition (although starting IV 0.73 dL/g for the control sample) as sample but without Irganox and the sample containing 1400 ppm Irganox 1010 over 24 hours.
Lower levels of Irganox 1010 were also investigated by blending the PET produced in this continuous process (containing 1400 ppm Irganox) in a twin screw extruder at 285°C with PET made by the same process but without Irganox. The levels investigated by this process were: 1400 ppm, 1050 ppm, 700 ppm (all comparative), 350 ppm, 250 ppm, 200 ppm, 150 ppm (all in accordance with the invention), 100 ppm, 50 ppm, 25 ppm, 12.5 ppm, and 6 ppm (all comparative). It is apparent from Figure 4 that Irganox 1010 slows the rate of degradation of PET. The slope of the lines is an indication of the rate of degradation. All of the lines representing Irganox in the claimed range indicate a less rapid degradation than the line with no Irganox.

**Example 3: Stabilizer Added in the Middle Phase**

PET oligomer was prepared as described for Control A in Example 1, Tables 1 and 2. The oligomer (102.9 g) was then placed in a 500 mL round bottom flask equipped with a nitrogen inlet and mechanical stirrer. A lithium-aluminum catalyst mixture (0.40 g of a solution containing LiOH (2300 ppm Li) and aluminum isopropoxide (3000 ppm Al) in ethylene glycol) and 0.12 g Irganox 1010 were added to the flask. All polymerizations were conducted using a distributed control system under the conditions shown in Table 6 below. Target levels for the finished polymer were 9 ppm Li, 12 ppm Al, and 1200 ppm Irganox 1010 (Sample D). A second polymerization was conducted under the same conditions except that phosphoric acid was added near the end of polymerization (Table 6, stage 10) at a target level of 100 ppm (Sample E). A third polymerization was completed in which Irganox 1010 was added to the oligomer and was targeted at 800 ppm, and the phosphoric acid was added near the end of polymerization (Table 6, stage 10) and had a P target level of 40 ppm (Sample F). Prior to each polymerization, the flask and contents were purged with nitrogen. A steady sweep of nitrogen at 0.4 scfh was maintained over the contents during the 10 minute melting phase prior to applying vacuum.

Table 6: Polymerization Conditions

| Stage | (min.) | (°C) | (torr) | (rpm) |
|---|---|---|---|---|
| 1 | 0.1 | 275 | 760 | 0 |
| 2 | 10 | 275 | 760 | 150 |
| 3 | 8 | 288 | 33 | 150 |
| 4 | 25 | 288 | 33 | 150 |
| 5 | 5 | 285 | 5 | 100 |
| 6 | 60 | 285 | 5 | 100 |
| 7 | 5 | 284 | 2.3 | 50 |
| 8 | 120 | 284 | 2.3 | 50 |
| 9 | 2 | 284 | 250 | 50 |
| 10 | 4 | 284 | 250 | 50 |
| 11 | 1 | 284 | 250 | 0 |

The polymer was subsequently ground and submitted for analytical testing. Data for the resulting PET polymers are shown in Tables 7-10. Haze levels in PET were measured using a Hach Ratio Turbidimeter. The haze was measured by nephelometry. A 2.3 gram sample was dissolved into 30 mL of a solvent (30% hexafluoroisopropanol, 70% methylene chloride) and placed in a 8 dram vial. The vial was capped and spun on a spinning wheel to stir for 24 hr. The solution in the vial was then read directly in the Hach Ratio Turbidimeter. A beam of light was directed through a test sample. Detectors were placed to measure the 90-degree light scatter, the forward scattered light and their light transmitted through the sample. By electronically conditioning the ratio of the output of the 90-degree detector to the sum of the other two detectors, excellent linearity and color rejection was attained. The design of the optical system makes stray light negligible.

Weight percent diethylene glycol (DEG) was determined by hydrolyzing approximately 0.15 g of the polymer sample with alcoholic KOH and pyridine. The sample was then neutralized and silylated with BSTFA (N,O-bis(trimethylsilyl)trifluoroacetamide) and analyzed on a gas chromatograph (Hewlett-Packard 6890 or equivalent) using nonyl alcohol as the internal standard.

The analyses for Li, Al and P were done by an inductively coupled plasma optical emission spectroscopy (ICP-OES).

**Table 7: Final Polymer Data**

| Polymer Reference no. | Irg 1010 charge (ppm) | Ih.V (dL/g) | Li (ppm) | Al (ppm) | P (ppm) | Irg. 1010 (ppm) | DEG (wt%) | Sol. haze (NTU) |
|---|---|---|---|---|---|---|---|---|
| Sample D | 1200 | 0.971 | 9 | 13 | 0 | 1268 | 1.07 | 3.7 |
| Sample E | 1200 | 0.666 | 9 | 12 | 97 | 1252 | 1.09 | 2.68 |
| Sample F | 800 | 0.663 | 9 | 13 | 42 | 782 | 1.15 | 2.38 |

**Table 8: Stability data for Sample D**

| hours | I.V. (dL/g) | L* | a* | b* | Irg. 1010 (ppm) |
|---|---|---|---|---|---|
| 0 | 0.954 | 76.82 | -2.37 | 6.28 | 1268 |
| 1 | 0.962 | | | | |
| 2 | 0.971 | | | | |
| 4 | 0.993 | | | | |
| 6 | 0.987 | | | | |
| 10 | 0.984 | | | | |
| 24 | 0.846 | 64.98 | 3.54 | 12.11 | 1317 |

**Table 9: Stability data for Sample E**

| hours | I.V. (dL/g) | L* | a* | b* | Irg. 1010 (ppm) |
|---|---|---|---|---|---|
| 0 | 0.677 | 77.24 | -1.91 | 5.20 | 1252 |
| 1 | 0.675 | | | | |
| 2 | 0.675 | | | | |
| 4 | 0.68 | | | | |
| 6 | 0.678 | | | | |
| 12 | 0.701 | | | | |
| 24 | 0.708 | 78.73 | 1.46 | 6.73 | 1316 |

**Table 10: Stability data for Sample F**

| hours | Ih.V (dL/g) | L* | a* | b* | Irg. 1010 (ppm) |
|---|---|---|---|---|---|
| 0 | 0.669 | 78.91 | -1.93 | 5.35 | 782 |
| 1 | 0.671 | | | | |
| 2 | 0.668 | | | | |
| 4 | 0.671 | | | | |
| 6 | 0.666 | | | | |
| 14 | 0.674 | | | | |
| 24 | 0.682 | 79.23 | -1.08 | 7.21 | 768 |

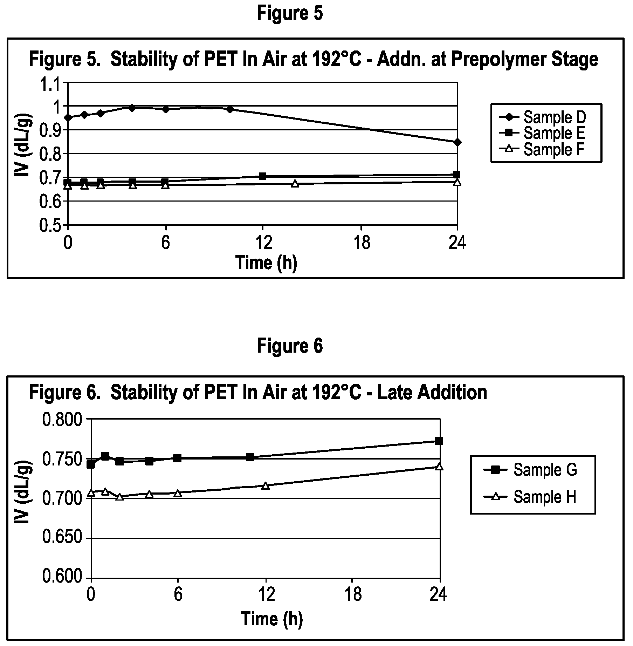

**Fig. 5** shows the plotted IV data from Tables 8-10.

**Example 4 (comparative): Stabilizer Added at the End of the Polymerization Stage**

PET was produced in a continuous process as described in Example 2 under the conditions given in Example 2 but without the addition of phosphoric acid at the end of the process and without the addition of Irganox 1010. Approximately 100 g of the PET was then dried thoroughly overnight under vacuum and placed in a flask under nitrogen along with the desired amount of Irganox 1010 (see Table 11). The flask was equipped with a mechanical stirrer and submerged in a molten metal bath at 278°C. The PET was allowed to melt without stirring for 45 minutes. Afterwards, slow stirring (about 10 rpm) was begun to complete the melting of the pellets. Phosphoric acid (0.008 g in Sample G and 0.016g in Sample H) was added when melting was complete. The stir speed was gradually increased to 30 rpm over a 5-minute period and stirring was continued for 10 minutes. Samples of the resulting blends were ground and submitted for analysis. The results are located in Tables 11-13.

Table 11: Final Polymer Data

| Blend Reference no. | Irg. 1010 measured (ppm) | IV (dL/g) | Li (ppm) | Al (ppm) | P (ppm) | DEG (wt%) |
|---|---|---|---|---|---|---|
| Sample G | 1944 | 0.752 | 9 | 12 | 22 | 1.44 |
| Sample H | 3664 | 0.705 | 9 | 12 | 55 | 1.43 |

**Table 12: Stability Data for Sample G**

| hours | I.V. (dL/g) | L* | a* | b* | ppm Irg. 1010 |
|---|---|---|---|---|---|
| 0 | 0.743 | 75.91 | -1.17 | 0.58 | 1944 |
| 1 | 0.753 | | | | |
| 2 | 0.746 | | | | |
| 4 | 0.746 | | | | |
| 6 | 0.750 | | | | |
| 11 | 0.752 | | | | |
| 24 | 0.773 | 73.24 | 0.36 | 9.72 | NA |

**Table 13: Stability Data for Sample H**

| hours | I.V. (dL/g) | L* | a* | b* | ppm Irg. 1010 |
|---|---|---|---|---|---|
| 0 | 0.708 | 75.14 | -1.17 | 0.63 | 3664 |
| 1 | 0.709 | | | | |
| 2 | 0.703 | | | | |
| 4 | 0.706 | | | | |
| 6 | 0.707 | | | | |
| 12 | 0.717 | | | | |
| 24 | 0.741 | 74.81 | -1.4 | 5.92 | 3578 |

**Fig. 6** shows the plotted IV data from Tables 12-13.

**Example 5 (comparative): Additional Stabilizers**

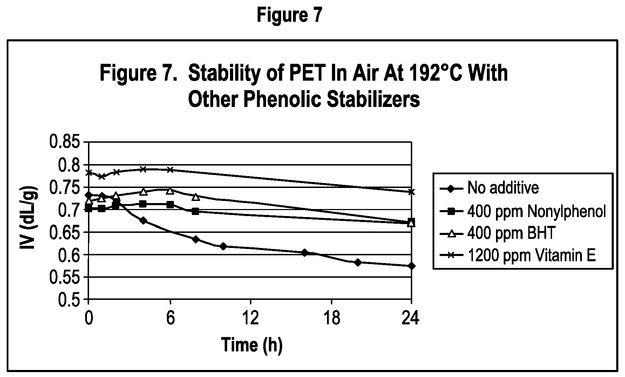

Phenolic compounds other than Irganox 1010 have been shown to stabilize PET to molecular weight degradation. These compounds were tested by blending the PET produced in a continuous phase process as described in Example 2, but without phosphoric acid being added late in the process and without Irganox 1010. BHT (2,6-di-*tert*-butyl-4-methylphenol), vitamin E and nonylphenol were blended using the following procedure: PET (100 g) was dried for 24 hours at 110°C under vacuum, melted for 50 minutes at 278°C and then blended separately with BHT, vitamin E and nonylphenol for 10 minutes at 30 rpm in a round bottom flask. All of these compounds showed the ability to dramatically reduce molecular weight loss in PET in air at 192°C, as illustrated in **Fig. 7.**

**Claims**

1.  An antimony-free polyester polymer comprising
    at least one polyethylene terephthalate polyester;
    at least one alkali metal-aluminum compound; and
    at least one phenolic stabilizer;
    wherein said polyethylene terephthalate polyester comprises

(i) residues of at least one carboxylic acid component wherein at least 90 mole% of the residues are residues of terephthalic acid based on 100 mole% of the residues of at least one carboxylic acid component,

(ii) residues of at least one hydroxyl component wherein at least 90 mole% of the residues are residues of ethylene glycol, based on 100 mole% of the residues of at least one hydroxyl component, and

(iii) up to 10 mole% of residues chosen from residues of isophthalic acid, residues of naphthalene dicarboxylic acid, residues of diethylene glycol, residues of 1,4-cyclohexanediol, and residues of derivatives thereof,

wherein said alkali metal-aluminum compound is at least one lithium aluminum compound; and wherein said phenolic stabilizer is from 100 ppm to 350 ppm of pentaerythritol tetrakis[3-(3,5-di-tert-butyl-4-hydroxyphenyl)propionate]; and wherein the polyester polymer further comprises residues of phosphoric acid.

2.  The polyester polymer of claim 1, wherein said phenolic stabilizer is from 100 to 200 ppm.

3.  The polyester polymer of claim 1, wherein said phenolic stabilizer is from 200 to 300 ppm.

4.  An article comprising the polyester according to claim 1.

5.  The article according to claim 4, wherein said article is a bottle, a preform, a jar, or a tray.

6.  A melt phase process for making an antimony-free polyester polymer melt phase product comprising forming a slurry comprising at least one glycol chosen from ethylene glycol and derivatives of ethylene glycol and at least one acid chosen from terephthalic acid and derivatives of terephthalic acid; adding 100 ppm to 350 ppm of at least one phenolic stabilizer chosen from pentaerythritol tetrakis[3-(3,5-di-tert-butyl-4-hydroxyphenyl)propionate], and phosphoric acid; and reacting said at least one glycol and said at least one acid in the presence of at least one catalyst chosen from alkali-aluminum catalysts, wherein said at least one catalyst is chosen from lithium-aluminum catalysts.

7.  The melt phase process according to claim 6, wherein said process does not comprise solid state polymerization.

**Patentansprüche**

1.  Antimonfreies Polyesterpolymer, umfassend
    mindestens einen Polyethylenterepthalat-Polyester;
    mindestens eine Alkalimetall-Aluminium-Verbindung; und
    mindestens einen phenolischen Stabilisator;
    wobei besagter Polyethylenterephthalat-Polyester umfasst:

    (i) Reste mindestens einer Carbonsäurekomponente, wobei mindestens 90 Mol-% der Reste Reste der Terephthalsäure sind, bezogen auf 100 Mol-% der Reste mindestens einer Carbonsäurekomponente,

    (ii) Reste mindestens einer Hydroxylkomponente, wobei mindestens 90 Mol-% der Reste Reste des Ethylenglykols sind, bezogen auf 100 Mol-% der Reste mindestens einer Hydroxylkomponente, und

    (iii) bis zu 10 Mol-% an Resten ausgewählt aus Resten der Isophthalsäure, Resten der Naphthalindicarbonsäure, Resten des Diethylenglykols, Resten von 1,4-Cyclohexandiol, und Resten von Derivaten davon,

    wobei besagte Alkalimetall-Aluminium-Verbindung mindestens eine Lithium-Aluminium-Verbindung ist; und wobei besagter phenolische Stabilisator 100 ppm bis 350 ppm an Pentaerythrit-tetrakis[3-(3,5-di-tert-butyl-4-hydroxyphenyl) propionat] sind;
    und wobei das Polyesterpolymer weiter Reste der Phosphorsäure umfasst.

2.  Polyesterpolymer nach Anspruch 1, wobei besagter phenolische Stabilisator in einer Menge von 100 bis 200 ppm vorliegt.

3.  Polyesterpolymer nach Anspruch 1, wobei besagter phenolische Stabilisator in einer Menge von 200 bis 300 ppm vorliegt.

4.  Gegenstand umfassend den Polyester nach Anspruch 1.

5.  Gegenstand nach Anspruch 4, wobei besagter Gegenstand eine Flasche, eine Vorform, ein Gefäß oder ein Tablett ist.

**6.** Schmelzphasenverfahren zum Herstellen eines Schmelzphasenprodukts eines antimonfreien Polyesterpolymers, umfassend das Bilden einer Aufschlämmung, umfassend mindestens ein Glykol ausgewählt aus Ethylenglykol und Derivaten von Ethylenglykol, und mindestens eine Säure, ausgewählt aus Terephthalsäure und Derivaten der Terephthalsäure; Hinzufügen von 100 ppm bis 350 ppm mindestens eines phenolischen Stabilisators ausgewählt aus Pentaerythrit-tetrakis[3-(3,5-di-tert-butyl-4-hydroxyphenyl)propionat] und Phosphorsäure; und Reagieren des besagten mindestens einen Glykols und der besagten mindestens einen Säure in Gegenwart mindestens eines Katalysators ausgewählt aus Alkali-Aluminium-Katalysatoren, wobei besagter mindestens eine Katalysator ausgewählt ist aus Lithium-Aluminium-Katalysatoren.

**7.** Schmelzphasenverfahren nach Anspruch 6, wobei besagtes Verfahren nicht das Polymerisieren im Festzustand umfasst.


**Revendications**

**1.** Polymère de polyester sans antimoine comprenant au moins un polyester de téréphtalate de polyéthylène ;
au moins un composé de métal alcalin-aluminium ; et
au moins un stabilisateur phénolique ;
dans lequel ledit polyester de téréphtalate de polyéthylène comprend

(i) des résidus d'au moins un composant acide carboxylique, au moins 90 % en mole des résidus étant des résidus d'acide téréphtalique sur la base de 100 % en mole des résidus d'au moins un composant acide carboxylique,
(ii) des résidus d'au moins un composant hydroxyle, au moins 90 % en mole des résidus étant des résidus d'éthylène glycol, sur la base de 100 % en mole des résidus d'au moins un composant hydroxyle, et
(iii) un maximum de 10 % en mole de résidus choisis parmi les résidus d'acide isophtalique, les résidus d'acide naphtalène dicarboxylique, les résidus de diéthylène glycol, les résidus de 1,4-cyclohexanediol et les résidus de leurs dérivés,

dans lequel ledit composé de métal alcalin-aluminium est au moins un composé de lithium-aluminium ; et dans lequel ledit stabilisateur phénolique comporte de 100 ppm à 350 ppm de tétrakis[3-(3,5-di-tert-butyl-4-hydroxyphényl)propionate] de pentaérythritol ;
et dans lequel le polymère de polyester comprend en outre des résidus d'acide phosphorique.

**2.** Polymère de polyester selon la revendication 1, dans lequel ledit stabilisateur phénolique est présent à raison de 100 à 200 ppm.

**3.** Polymère de polyester selon la revendication 1, dans lequel ledit stabilisateur phénolique est présent à raison de 200 à 300 ppm.

**4.** Article comprenant le polyester selon la revendication 1.

**5.** Article selon la revendication 4, dans lequel ledit article est une bouteille, une préforme, une bonbonne ou un plateau.

**6.** Procédé en phase fondue destiné à la fabrication d'un produit en phase fondue de polymère de polyester sans antimoine comprenant la formation d'une suspension épaisse comprenant au moins un glycol choisi parmi l'éthylène glycol et les dérivés de l'éthylène glycol et au moins un acide choisi parmi l'acide téréphtalique et les dérivés d'acide téréphtalique ; l'ajout de 100 ppm à 350 ppm d'au moins un stabilisateur phénolique choisi parmi le tétrakis[3-(3,5-di-tert-butyl-4-hydroxyphényl)propionate] de pentaérythritol, et d'acide phosphorique ; et la réaction dudit au moins un glycol et dudit au moins un acide en présence d'au moins un catalyseur choisi parmi les catalyseurs d'alcali-aluminium, dans lequel ledit au moins un catalyseur est choisi parmi les catalyseurs de lithium-aluminium.

**7.** Procédé en phase fondue selon la revendication 6, dans lequel ledit procédé ne comprend pas de polymérisation à l'état solide.

Figure 1

Figure 1. Stability of PET In Air at 192°C - Early Addition

Figure 2

Figure 2. Stability of PET In Air at 192 °C - Early Addition

Figure 3

Figure 3. Stability in Air 192°C of PET Produced By A Continuous Process

Figure 4

Figure 4. Stability of PET With Varying Levels of Irganox 1010

Figure 5

Figure 5. Stability of PET In Air at 192°C - Addn. at Prepolymer Stage

Figure 6

Figure 6. Stability of PET In Air at 192°C - Late Addition

Figure 7

Figure 7. Stability of PET In Air At 192°C With Other Phenolic Stabilizers

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002332337 A
- EP 1227117 A
- US 2720506 A
- EP 620245 A
- WO 2006032022 A